# EUROPEAN PATENT APPLICATION

(11) **EP 3 858 148 A1**
(43) Date of publication of application: **04.08.2021**
(21) Application number: 21154905.0
(22) Date of filing: 03.02.2021
(51) Int. Cl.: A23J 3/04, A23J 3/14, A23J 3/22, A23J 3/26, A23L 33/17, A23L 33/185

(54) **INSECT-BASED MEAT SUBSTITUTES**

(30) Priority: 03.02.2020 DK PA202070066
(71) Applicant: Hey Planet ApS, 2200 København N (DK)
(72) Inventor: Sigurgeirsdottir, Malena, 2200 København N (DK); Buhl-Nielsen, Jessica, 1260 København K (DK)
(74) Representative: Plougmann Vingtoft a/s

(57) **Abstract**

The present invention relates to a food ingredient comprising insect powder and pea powder and preferably a stabilizer/emulsifier. The invention also relates to a food product comprising insect powder and pea powder resembling minced beef meet or chicken bites. The invention also relates to processes for producing such food ingredients and food products.

## Description

### Technical field of the invention

The present invention relates to meat substitutes comprising buffalo worm powder, pea powder and optionally an emulsifier/stabilizer such as cremodan. Further, the present invention relates to processes for producing such meat substitutes.

### Background of the invention

Insects have the nutritional benefits of meat and a climate-impact similar to plants. Thus, if insects could be integrated in the daily intake of consumers it could have a strong impact on the climate.

Further, insects are nutritious, and sustainable to produce. Insects are very efficient at converting input (feed and water) into protein that humans can eat. Since they are cold-blooded and reproduce quickly, their so-called feed-conversion ratio is much lower than other animal protein sources.

Even when comparing to some plant protein sources insects can be argued to be more sustainable. Soy beans for instance take up a lot of land and require large amounts of water, whereas insects can be farmed vertically.

However, there is, especially in the western world, a resistance towards insects based food, especially since such insect-based foods, have a different texture, look and taste compared to normal animal-based meat.

Hence, an improved insect-based food would be advantageous, and in particular, insect-based food which resembles animal based meat products would be advantageous.

### Summary of the invention

The present invention relates to a meat substitute comprising buffalo worm powder, pea powder and preferably a stabilizer/emulsifier such as Cremodan. The meat substitute powders are prepared by mixing the components and texturizing using extruder technology. The mixed powders are exposed to a unique combination of settings that control the water and pressure in the extruder to form granulate and bigger chunks that resemble the texture of real meat. The granulate/chunks can absorb 2 or 3 times its own weight in water, forming a texture that looks like minced meat and chicken bites. The product can e.g. be used to form burger patties, make Bolognese or wok with 'chicken' bites. Thus, two forms of meat substitute have been made; granulate and chunks.

Technical challenges which have been overcome are:

### Recipe

The products consist of extruded pea powder/flour and insect powder/flour and preferably a stabilizer/emulsifier, preferably cremodan. It is known that it is possible to texturize pea protein, so it is similar to a meat-like texture. It is however not known or has been proven that the same can be done with insect powder/flour, or a combination of pea protein and insect protein. Insect proteins are smaller and therefore act differently in an extruder than pea protein.

It has shown to be challenging to texturize insect powder, however, a mix of both has been successful, using a special combination. It has been found that a recipe comprising e.g. 35-40% insect powder, 59.7-64-7 pea powder and 0.3% cremodan works very well (see example 3). It has surprisingly been found that when the stabilizer cremodan is added to the flour/powder mix, it is possible to extrude with a higher content of insect powder. Due to the high content of fat in insect powder, it has been hard to extrude. However, the stabilizer Cremodan has made it possible to reach e.g. 40% insect powder in the mix (see example 3).

An extruder has the following elements, which can be combined in unique ways, to form specific unique end products:

### Screw configuration selection:

An extruder has a range of screw settings, which may impact how the powder is processed. It is important that important screw elements are positioned correctly, in order to give the proteins and starch the correct treatment in the extruder. Through several trials, an optimal setting has been identified (example 1).

### Selection of molding tool/nozzle:

The shape and thickness of the nozzle, affects not only the design of the product, but also the machining process. Among other things, both the pressure, the temperature and the processing time will be affected by the design of the nozzle.

### Rehydration of the finished product:

The fiber structure of the extruded product can only be assessed after the dried product is soaked in liquid. This is done to ensure that the product meets the consumer's expectation of structure and texture. Consumer test panels have led to specific extruder combinations, where the end-product resembles the texture of real meat according to the test panels.

Thus, an object of the present invention relates to the provision of insect-based meat substitutes, such as substitutes which resembles minced meat or chicken bites.

In particular, it is an object of the present invention to provide a meat substitute that solves the problems of the prior art with resembling real meat such as minced beef meat or chicken bites.

Thus, one aspect of the invention relates to a food ingredient comprising
- 20 - 55% (w/w - on a dry matter basis) insect flour/powder, preferably buffalo worm flour/powder; and
- 45 - 80% (w/w - on a dry matter basis) pea flour/powder.

Preferably, the food ingredient comprises
- 35 - 55% (w/w - on a dry matter basis) insect flour, preferably buffalo worm flour/powder;
- 30 - 70% (w/w - on a dry matter basis) pea flour/powder; and
- 0.1 - 1% (w/w - on a dry matter basis) of stabilizer/emulsifier, preferably Cremodan.

Another aspect of the present invention relates to a food product comprising the food ingredient according to the present invention.

Yet another aspect of the present invention is to provide a process for producing a food ingredient according to the invention and/or food product according to the invention comprising the steps of
a) providing a mixture comprising insect powder/flour, pea powder, optionally (and preferred) cremodan and water;
b) extruding the mixture through a extruder under the following conditions:
   I. a pressure in the range in 7-11 bars, such as 8-10, preferably around 9 bars;
   II. an extrusion temperature in the range 50-200°C, such as 130-200°C; and
c) drying the extruded ingredient to provide an extruded and dried food ingredient;
d) optionally, rehydrating the extruded product, such as in water, to provide a rehydrated extruded product, such as with a structure resembling minced meat or chicken bites; and
e) optionally, frying the extruded and optionally rehydrated product, to provide a fried food ingredient.

Still another aspect of the present invention is to provide a food ingredient or food product obtained/obtainable by a process according to the invention.

### Brief description of the figures

Figure 1 shows recipe 5D after extrusion, drying and dissolved in water, resembling minced meat.
Figure 2 shows recipe 5D after extrusion and frying. A clear light brown roasting crust is visible. Further, the product sticks together.
Figure 3 shows the extruded product after drying step c).

The present invention will now be described in more detail in the following.

### Detailed description of the invention

### Food ingredient

As outlined above, the present invention relates to a meat substitute comprising insect flour and pea powder. Thus, a first aspect of the invention relates to a food ingredient comprising
- 20 - 55% (w/w - on a dry matter basis) insect flour, preferably buffalo worm flour; and
- 45 - 80% (w/w - on a dry matter basis) pea powder.

A further aspect relates to a food ingredient comprising
- 20 - 55% (w/w - on a dry matter basis) insect powder, preferably buffalo worm powder; and
- 43 - 78% (w/w - on a dry matter basis) pea powder; and
- optionally a stabilizer/emulsifier, such as in the range 0.25 - 2% (w/w - on a dry matter basis).

In a preferred embodiment, the food ingredient comprises
- 20 - 40% (w/w - on a dry matter basis) insect powder/flour, preferably 25-35%, such as around 30%; and
- 58 - 80% (w/w - on a dry matter basis) pea powder, preferably 65 - 75%, such as around 70%.

In another preferred embodiment, the food ingredient comprises
- 20 - 55% (w/w - on a dry matter basis) insect flour, preferably 40-55%, more preferably 45-55% such as around 50%; and
- 45 - 70% (w/w - on a dry matter basis) pea powder, preferably 45 - 60%, more preferably 45-55%, such as around 50%.

In the present context, the terms "powder" and "flour" may be used interchangeable.

In yet a preferred embodiment, the food ingredient comprises
- 35 - 55% (w/w - on a dry matter basis) insect flour, preferably buffalo worm flour/powder;
- 43 - 63% (w/w - on a dry matter basis) pea flour/powder; and
- 0.25 - 2% (w/w - on a dry matter basis) of stabilizer/emulsifier, preferably Cremodan.

In yet another preferred embodiment, the food ingredient comprises
- 35 - 45% (w/w - on a dry matter basis) insect flour/powder, preferably buffalo worm flour/powder;
- 53 - 63% (w/w - on a dry matter basis) pea flour/powder; and
- 0.25 - 2% (w/w - on a dry matter basis) of stabilizer/emulsifier, preferably Cremodan.

In an embodiment, the food ingredient comprises 35 - 45% (w/w - on a dry matter basis) insect flour/powder, preferably buffalo worm flour/powder, such as in the range 37-43% or such as around 40%.

In an embodiment, the food ingredient comprises 30 - 64% (w/w - on a dry matter basis) pea flour/powder, such as 40-64%, such as 50-60%.

In an embodiment, the food ingredient comprises 0.1-2% (w/w - on a dry matter basis) of stabilizer/emulsifier, preferably Cremodan, such as in the range 0.1-0.1%, such as in the range 0.1 - 0.5% such as 0.2 - 0.4%, such as around 0.3%. As shown in example 3, a concentration around 0.3% cremodan has given the best overall results. Cremodan is normally not used in extrusion processes using elevated temperatures.

In an embodiment, the stabilizer/emulsifier comprises carrageenan and/or guar gum. In yet an embodiment, stabilizer/emulsifier comprises carrageenan and guar gum.

Preferably, the stabilizer/emulsifier is Cremodan, available from Danisco, Denmark (Dupont). Cremodan is believed to be a blend of mono and diglycerides, sodium alginate, locust bean gum, carrageenan, guar gum and an anti-caking agent.

In another embodiment, the stabilizer/emulsifier comprises a blend of mono and diglycerides, sodium alginate, locust bean gum, carrageenan, guar gum and optionally an anti-caking agent.

In yet another embodiment, the stabilizer/emulsifier comprises guar gum, mono-and diglycerides of fatty acids, sorbitan esters of fatty acids and carrageenan.

In an embodiment, Cremodan (Dansico) is selected from the group consisting of cremodan SE30, CREMODAN SE 315, CREMODAN SUPER, Cremodan 709VEG and Cremodan 1001 IcePro.

CREMODAN SE 30 is an integrated blend of food grade emulsifiers (Mono and Diglycerides) and stabilizers (Carrageenan, LBG, Sodium Alginate, Guar Gum).

CREMODAN SUPER is a Mono-Diglyceride made from edible fully hydrogenated vegetable fat.

Cremodan 709 VEG is a standard commercially available emulsifier/stabilizer cocktail for ice-cream preparation where the emulsifier is of the type mono- and diglycerides, partly unsaturated and the stabilizers are locust bean gum, guar gum and carrageenan.

Cremodan 1001 IcePro is a commercially available emulsifier / stabilizer cocktail for ice-cream preparation where the emulsifier is propane- 1,2-diol esters of fatty acids and of the type mono- and diglycerides, partly unsaturated and the stabilizers are locust bean gum, and guar gum.

Cremodan 315 is a commercial available emulsifier / stabilizer cocktail for icecream preparation where the emulsifier is of the type mono- and diglycerides and the stabilizers are locust bean gum and guar gum.

The skilled person will be able to use emulsifier / stabilizer cocktails different from Cremodan types, based on the information provided in here.

In yet an embodiment the pea powder is a combination of pea isolate and pea protein such as a ratio of the pea powder in the range 1:5 to 1:1 of pea isolate:pea protein, such as 2:5 to 1:1 or such as 3:5 to 1:1. In the example section, different ratios have been tested.

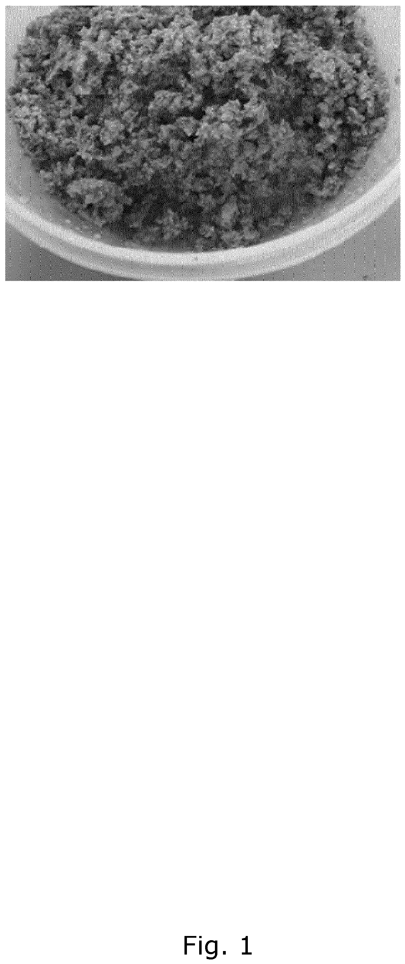

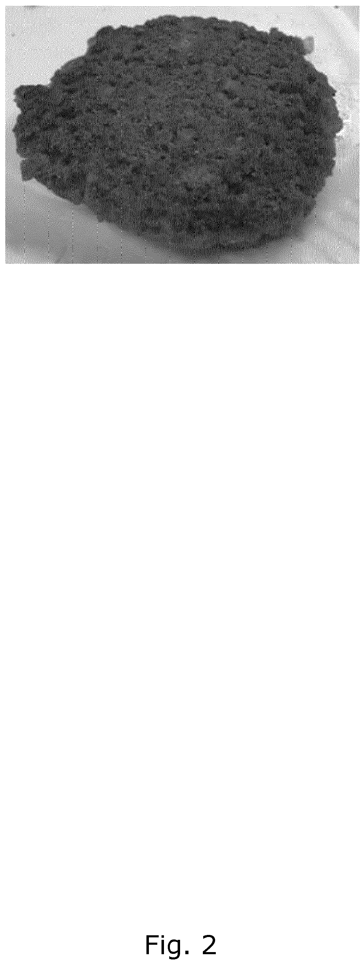

As shown in example 1, an optimized composition and process has been identified for producing meat substitutes comprising insect flour and pea powder. Example 2 (and figures 1 and 2) shows such meat substitute products. Example 3 shows optimized recipes with high content of insect powder.

In an embodiment, the pea powder is selected from the group consisting of pea protein isolate, pea protein, pea protein pellets and combinations thereof, such as isolated from yellow or green pea, preferably green pea. In the example section, a combination of two pea (protein) sources is used.

Different insect flour sources may be used, however in the example section buffalo worm flour (*Alphitobius diaperinus*) has been tested. Thus, in an embodiment, the insect flour is buffalo worm flour (*Alphitobius diaperinus*), such as whole buffalo worm flour.

After leaving the extruder, the food ingredient may be in the form of granules or larger chunks/bites. This can be before or after drying.

Thus, in an embodiment the food ingredient is in the form of granules. In a related embodiment, the granules have a mean (diameter) size in the range 0.5-1.5 cm, such as 0.8-1.2 cm.

In another embodiment, the food ingredient is in the form of chunks/bites. In a related embodiment, the chunks/bites have a mean (diameter) size in the range 2-5 cm, such as in the range 2-4 cm, such as 2.5-4 cm, or such as 3-4 cm.

The texture of the ingredient changes depending on the water content. Thus, in a further embodiment, the food ingredient has a water content in the range 15-70% (w/w), such as 30-60% such as 35-55%.

The food ingredient may be rehydrated or mixed with liquid. Thus, in yet an embodiment, the food ingredient has
- a texture that resembles meat, such as minced meat, preferably a texture that resembles minced beef meat or minced pork meat; or
- a texture that resembles meat bites, such as poultry bites, preferably such as chicken bites.

In another embodiment, the food ingredient is in the form of a granulate or a chunk, such as texturized granulate or chunks. In yet an embodiment the food ingredient is in the form of chunks, flakes, nuggets, grains, or strips.

In yet an embodiment, the food ingredient is an extruded food ingredient.

### Food product

The food ingredient according to the present invention may form part of a food product or be a food product in its own right. Thus, an aspect of the invention relates to a food product comprising the food ingredient according to the present invention. Examples of food products are described in example 2 and shown in figure 1 and 2.

In an embodiment, the food is selected from the group consisting of a meat burger substitute, a minced meat substitute, and a chicken bite substitute, and meat ball substitute.

The food product may comprise further components/ingredients. Thus, in an embodiment, the food product comprises one or more components selected from the group consisting of a binder, flavour, salt, spice, vegetable oil, fruits, vegetables, eggs and nuts. Preferably, the food products comprises a binder to improve the properties of the product. In an embodiment, the binder is agar, such methyl cellulose or gluten protein or combination thereof. The skilled person could find other suitable binders known in the art. Preferably, the food ingredient or food product comprises in the range 0.5 -2% (w/w) of the binder, preferably in the range 1-1.5% (w/w).

An advantage of the food ingredients and food products according to the invention is of course the provision of meat free food products. Thus, in an embodiment, the food product (and food ingredient) is free from (mammalian) meat products, such as pork and beef. The products may e.g. also be free from dairy products and fish products.

In an embodiment, the food product has a moisture content in the range 40-60% (w/w).

### Process for producing food ingredient and food products

Yet an aspect of the invention relates to a process for producing a food ingredient according to the invention and/or food product according to the invention comprising the steps of
a) providing a mixture comprising insect flour, pea powder and water;
b) extruding the mixture through a extruder under the following conditions
   i. a pressure in the range in 7-11 bars, such as 8-10, preferably around 9 bars;
   ii. an extrusion temperature in the range 50-200°C, such as 130-200°C; and
b) drying the extruded ingredient to provide an extruded and dried food ingredient;
c) optionally, rehydrating the extruded product, such as in water, to provide a rehydrated extruded product/ingredient, such as with a structure resembling minced meat or chicken bites; and
d) optionally, frying the extruded and optionally rehydrated product/ingredient, to provide a fried food ingredient/product.

In an embodiment, in step a), the water content is in the range 15-35%, such as 20-30%, such as around 25%.

In an embodiment, the screw speed (RPM) in the extruder is in the range 1000-2000 RPM, such as 1200-1800 RPM, such as 1400-1600 RPM, or such as around 1500 RPM, or in the range 1600-1800 RPM.

In a preferred embodiment, one or more binders are added in step a) or d) or both. In a related embodiment, the binder is added to a final concentration of the food ingredient or food product comprises in the range 0.5 -2% (w/w) of the binder, preferably in the range 1-1.5% (w/w). In an embodiment, the binder is methyl cellulose.

In yet an embodiment, the nozzle of the extruder has a diameter in the range 1-5 mm, such as 2-4 mm, such as 2.5-3.5 mm or such as around 4 mm. Preferably the nozzle is circular.

In an embodiment, drying step c) is performed for 2-60 minutes at 60°C, such as for 2-30 minutes, 5-20 minutes, or such as around 10 minutes at 60°C.

In an embodiment, the temperature during extrusion in step b) is in the range 100-200°C, such 130-180°C, such as in the range 150-160°C, preferably around 155°C.

In another embodiment, the temperature during extrusion in step b) is in the range 50-180°C, such as in the range 50-130°C, such as in the range 50-100°C or 50-80°C.

In an embodiment, the mixture provided in step a) is a food ingredient according to the invention or comprises the components of the food ingredient according to the invention. Thus in an embodiment, the mixture provided in step a) comprises
- 20 - 55% (w/w - on a dry matter basis) insect powder, preferably buffalo worm powder; and
- 45 - 80% (w/w - on a dry matter basis) pea powder; and
- optionally a stabilizer/emulsifier;

OR
- 20 - 40% (w/w - on a dry matter basis) insect powder, preferably 25-35%, such as around 30%; and
- 60 - 80% (w/w - on a dry matter basis) pea powder, preferably 65 - 75%, such as around 70%;

OR
- 40 - 55% (w/w - on a dry matter basis) insect powder, preferably 40-55%, more preferably 45-55% such as around 50%; and
- 45 - 60% (w/w - on a dry matter basis) pea powder, preferably 45 - 60%, more preferably 45-55%, such as around 50%;

OR
- 35 - 45% (w/w - on a dry matter basis) insect powder, preferably 40-55%, more preferably 45-55% such as around 50%; and
- 45 - 60% (w/w - on a dry matter basis) pea powder, preferably 45 - 60%, more preferably 45-55%, such as around 50%.

In an embodiment the mixture provided in step a) comprises a stabilizer/emulsifier, such as Cremodan, preferably in the range 0.25-2% (w/w - on a dry matter basis), such as in the range 0.3-2% preferably in the range 0.3-0.1%, more preferably 0.3-0.5%, such as around 0.3.

In an embodiment, the mixture provided in step a) comprises a stabilizer/emulsifier comprising carrageenan and/or guar gum.

In yet an embodiment, the stabilizer/emulsifier comprises a blend of mono and diglycerides, sodium alginate, locust bean gum, carrageenan, guar gum and optionally an anti-caking agent.

In an embodiment, the mixture provided in step a) comprises
- 35 - 55% (w/w - on a dry matter basis) insect powder, preferably buffalo worm powder;
- 43 - 63% (w/w - on a dry matter basis) pea flour/powder; and
- 0.25 - 2% (w/w - on a dry matter basis) of stabilizer/emulsifier, preferably Cremodan.

In an embodiment, the mixture provided in step a) comprises
- 35 - 45% (w/w - on a dry matter basis) insect flour/powder, preferably buffalo worm flour/powder;
- 53 - 63% (w/w - on a dry matter basis) pea flour/powder; and
- 0.25-2% (w/w - on a dry matter basis) of stabilizer/emulsifier, preferably Cremodan.

### A food ingredient or food product obtained/obtainable by a process

In yet an aspect the invention relates to a food ingredient or food product obtained/obtainable by a process according to the invention.

It should be noted that embodiments and features described in the context of one of the aspects of the present invention also apply to the other aspects of the invention.

All patent and non-patent references cited in the present application, are hereby incorporated by reference in their entirety.

The invention will now be described in further details in the following non-limiting examples.

### Examples

### Example 1 - optimization of recipes

### Aim of study

To optimize the recipe for producing meat substitutes comprising insect and pea powder.

### Materials and methods

Recipes were made from buffalo worm flour, *Alphitobius diaperinus* (Ento Pure Buffalo's), pea isolate (Pisane C9) and pea protein (55% protein).

Eight different mixes were tested in an extruder (see below). The mixtures were mixed to comprise 25% water before extrusion.

| Recipe 1 | | |
|---|---|---|
| Batch volume | 15 | kg |
| | | |

| | % | kg |
|---|---|---|
| Buffalo larvae powder | 30 | 4,5 |
| Pisane C9 | 0 | 0 |
| Pea protein 55% | 70 | 10,5 |
| Sum | 100 | 15 |

| Recipe 2 | | |
|---|---|---|
| Batch volume | 15 I | kg |
| | | |

| | % | kg |
|---|---|---|
| Buffalo larvae powder | 30 | 4,5 |
| Pisane C9 | 10 | 1,5 |
| Pea protein 55% | 60 | 9 |
| Sum | 100 | 15 |

| Recipe 3 | | |
|---|---|---|
| Batch volume | 15 | kg |
| | | |

| | % | kg |
|---|---|---|
| Buffalo larvae powder | 30 | 4,5 |
| Pisane C9 | 20 | 3 |
| Pea protein 55% | 50 | 7,5 |
| Sum | 100 | 15 |

| Recipe 4 | | |
|---|---|---|
| Batch volume | 15 | kg |
| | | |

| | % | kg |
|---|---|---|
| Buffalo larvae powder | 30 | 4,5 |
| Pisane C9 | 30 | 4,5 |
| Pea protein 55% | 40 | 6 |
| Sum | 100 | 15 |

| Recipe 5 | | |
|---|---|---|
| Batch volume | 15 | kg |
| | | |

| | % | kg |
|---|---|---|
| Buffalo larvae powder | 30 | 4,5 |
| Pisane C9 | 45 | 6,75 |
| Pea protein 55% | 25 | 3,75 |
| Sum | 100 | 15 |

| Recipe 6 | | |
|---|---|---|
| Batch volume | 15 | kg |
| | | |

| | % | kg |
|---|---|---|
| Buffalo larvae powder | 30 | 4,5 |
| Pisane C9 | 50 | 7,5 |
| Pea protein 55% | 20 | 3 |
| Sum | 100 | 15 |

| Recipe 7 | | |
|---|---|---|
| Batch volume | 15 | kg |
| | | |

| | % | kg |
|---|---|---|
| Buffalo larvae powder | 30 | 4,5 |
| Pisane C9 | 60 | 9 |
| Pea protein 55% | 10 | 1,5 |
| Sum | 100 | 15 |

| Recipe 8 | | |
|---|---|---|
| Batch volume | 15 | kg |
| | | |

| | % | kg |
|---|---|---|
| Buffalo larvae powder | 30 | 4,5 |
| Pisane C9 | 70 | 10,5 |
| Pea protein 55% | 0 | 0 |
| Sum | 100 | 15 |

### Extruder: Coperion ZSK 27Mc

### Settings:

| | |
|---|---|
| Temperature: | 190°C |
| Torque: | 17% |
| Throughput (kg/h): | 30 |
| Die pressure: | 9 bar |
| Screw speed (RPM) | 1500 |
| Die plate: | 1x 3mm (circular) |

All products were subsequently dried for 10 minutes at 60° C in an industrial drying oven after extrusion.

### Results

The results showed that recipe 5 provided the best particle/granulate size to resemble meat. The other recipes provided either to large or too small sizes.

Thus, recipe 5 was chosen, where further testing was done with different variables of the powders (5B, 5C and 5D):

| Recipe 5B | | |
|---|---|---|
| Batch volume | 15 | kg |
| | | |

| | % | kg |
|---|---|---|
| Buffalo larvae powder | 25 | 3,75 |
| Pisane C9 | 45 | 6,75 |
| Pea protein 55% | 30 | 4,5 |
| Sum | 100 | 15 |

| Recipe 5C | | |
|---|---|---|
| Batch volume | 15 | kg |
| | | |

| | % | kg |
|---|---|---|
| Buffalo larvae powder | 20 | 3 |
| Pisane C9 | 50 | 7,5 |
| Pea protein 55% | 30 | 4,5 |
| Sum | 100 | 15 |

| Recipe 5D | | |
|---|---|---|
| Batch volume | 15 | kg |
| | | |

| | % | kg |
|---|---|---|
| Buffalo larvae powder | 20 | 3 |
| Pisane C9 | 30 | 4,5 |
| Pea protein 55% | 50 | 7,5 |
| Sum | 100 | 15 |

### Conclusion

After the tests, it was concluded that recipe 5D performed the best, as it formed bigger particles and resembled "normal" meat to a higher extent than the other tested recipes.

It is noted that preliminary indications also show that around a 50% insect powder and 50% pea powder will likely have similar properties.

### Example 2 - production of minced meat and burger substitutes

### Aim of study

To verify that recipe 5D could indeed be used to produce "minced meat substitutes" and "burger" substitutes.

### Results

In recipe 5D 1.5% agar was added as binder.
Figure 1 shows that a minced meat substitute can indeed be produced when dissolving the food ingredient from recipe 5D in water.
Figure 2 shows that a fried meat substitute can be produced from recipe 5D.

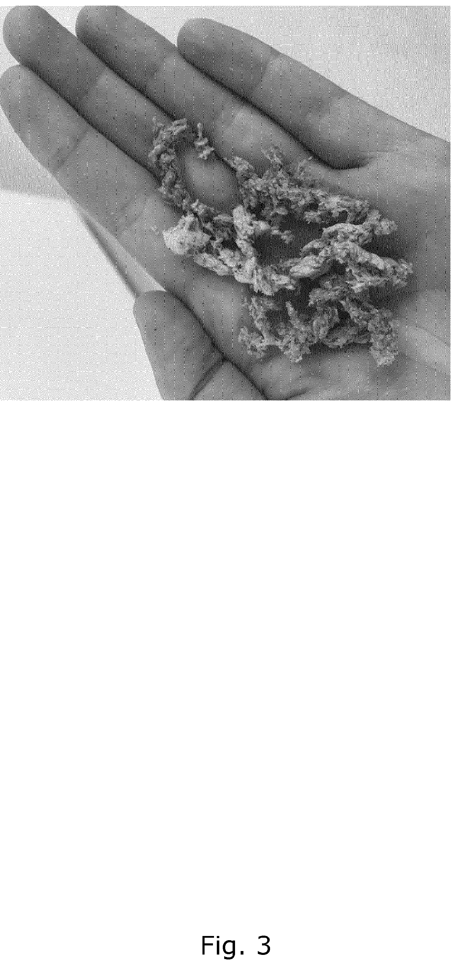

Figure 3 shows the extruded product after drying step c).

### Conclusion

Meat substitutes can be produced using the recipes and processes according to the present invention.

### Example 3 - Additional recipes

### Aim of study

To further optimize the recipe for producing meat substitutes comprising insect powder and pea powder.

### Materials and methods

### See also example 1.

Recipes were made from buffalo worm flour/powder, *Alphitobius diaperinus* (Ento Pure Buffalo's), pea isolate (Pisane C9) and pea protein (55% protein). In addition, the stabilizer Cremodan (CREMODAN® SUPER MB Mono-diglyceride; Danisco) was included.

| **Recipe 6** | | | |
|---|---|---|---|
| Batch amount | 20 kg | | |

| **Ingredients** | **%** | **kg** | **Protein content (%)** |
|---|---|---|---|
| Ento Pure Buffalo's | 35 | 7 | 21 |
| Picane C9 | 45 | 9 | 38,7 |
| Pea protein | 19.7 | 3.94 | 10,835 |
| Cremodan | 0.3 | 0.06 | 0 |
| **Total** | **100** | **20** | |

| **Recipe 7** | | | |
|---|---|---|---|
| Batch amount | 20 kg | | |

| **Ingredients** | **%** | **kg** | **Protein content (%)** |
|---|---|---|---|
| Ento Pure Buffalo's | 40 | 8 | 24 |
| Picane C9 | 45 | 9 | 38.7 |
| Pea protein | 14.7 | 2.94 | 8.085 |
| Cremodan | 0.3 | 0.06 | 0 |
| **Total** | 100 | 20 | |

We have tried to add an emulsifier in the extrusion process, in order to be able to make a texturized product with a higher content of buffalo beetle powder. Without an emulsifier, we were only able to extrude up to 20-25% buffalo beetle powder (see example 1). This is due to the high fat content in the insect powder + the small size of the protein structure in the powder.

However, when adding cremodan, we reached a satisfying result with 40% buffalo beetle powder. Cremodan helps create a granulate of 1-2cm, as it combines the fat and water altogether. Without being bound by theory up to 50% buffalo beetle powder is likely feasible using a stabilizer/emulsifier, such as cremodan.

We tried other emulsifiers such as calcium chloride, which did not work (data not shown). When working with cremodan, levels in the range from 0.1-2% cremodan were tested. Recipes containing from 0.3-2% cremodan worked. 2% cremodan and higher content of cremodan did not seem to have a stronger affect than 0.3% cremodan. However, when adding less than 0.3% cremodan, there would be no effect. At <0.3% cremodan does not bind fat and water together resulting in granulate (data not shown).

### Results and conclusion

When the stabilizer/emulsifier Cremodan is added to the flour/powder mix, it is possible to extrude with a higher content of insect powder. Due to the high content of fat in insect powder, it has been hard to extrude. However, the stabilizer cremodan (in the range 0.3-3%) has made it possible to reach around 40% insect powder in the mix. Higher levels may also be obtainable.

## Claims

1. A food ingredient comprising
- 20 - 55% (w/w - on a dry matter basis) insect powder, preferably buffalo worm powder; and
- 45 - 80% (w/w - on a dry matter basis) pea powder; and
- optionally a stabilizer/emulsifier.

2. The food ingredient according to claim 1 comprising
- 35 - 45% (w/w - on a dry matter basis) insect powder; and
- 45 - 60% (w/w - on a dry matter basis) pea powder, preferably 45 - 60%, more preferably 45-55%, such as around 50%.

3. The food ingredient according to claim 1 or 2, further comprising a stabilizer/emulsifier, such as Cremodan, preferably in the range 0.25-2% (w/w - on a dry matter basis), such as in the range 0.3-2% preferably in the range 0.3-0.1%, more preferably 0.3-0.5%, such as around 0.3.

4. The food ingredient according to claim 3, wherein the stabilizer/emulsifier comprises carrageenan and/or guar gum.

5. The food ingredient according to claim 3 or 4, wherein the stabilizer/emulsifier comprises a blend of mono and diglycerides, sodium alginate, locust bean gum, carrageenan, guar gum and optionally an anti-caking agent.

6. The food ingredient according to claim 1, comprising
- 35 - 55% (w/w - on a dry matter basis) insect powder, preferably buffalo worm powder;
- 43 - 63% (w/w - on a dry matter basis) pea powder; and
- 0.25 - 2% (w/w - on a dry matter basis) of stabilizer/emulsifier, preferably Cremodan.

7. The food ingredient according to claim 1, comprising
- 35 - 45% (w/w - on a dry matter basis) insect powder, preferably buffalo worm powder;
- 53 - 63% (w/w - on a dry matter basis) pea powder; and
- 0.25 - 2% (w/w - on a dry matter basis) of Cremodan.

8. The food ingredient according to any of the preceding claims,
• having a texture that resembles meat, such as minced meat, preferably a texture that resembles minced beef meat or minced pork meat; or
• having a texture that resembles meat bites, such as poultry bites, preferably such as chicken bites.

9. A food product comprising the food/feed ingredient according to any of the preceding claims.

10. The food product according to claim 9, being selected from the group consisting of a meat burger substitute, a minced meat substitute, a meat ball substitute and a chicken bite substitute.

11. A process for producing a food ingredient according to any of claims 1-8 and/or food product according to any of claims 9-10, comprising the steps of
a) providing a mixture comprising insect powder, pea powder and water;
b) extruding the mixture through a extruder under the following conditions
I. a pressure in the range in 7-11 bars, such as 8-10, preferably around 9 bars;
II. an extrusion temperature in the range 50-200°C; and
c) drying the extruded ingredient to provide an extruded and dried food ingredient;
d) optionally, rehydrating the extruded product, such as in water, to provide a rehydrated extruded product, such as with a structure resembling minced meat or chicken bites; and
e) optionally, frying the extruded and optionally rehydrated product, to provide a fried food ingredient.

12. The process according to claim 11, wherein, in step a), the water content is in the range 15-35%, such as 20-30%, such as around 25%.

13. The process according to claim 11 or 12, wherein the mixture provided in step a) comprises
- 20 - 55% (w/w - on a dry matter basis) insect powder, preferably buffalo worm powder; and
- 45 - 80% (w/w - on a dry matter basis) pea powder; and
- optionally a stabilizer/emulsifier;
OR
- 20 - 40% (w/w - on a dry matter basis) insect powder, preferably 25-35%, such as around 30%; and
- 60 - 80% (w/w - on a dry matter basis) pea powder, preferably 65 - 75%, such as around 70%;
OR
- 40 - 55% (w/w - on a dry matter basis) insect powder, preferably 40-55%, more preferably 45-55% such as around 50%; and
- 45 - 60% (w/w - on a dry matter basis) pea powder, preferably 45 - 60%, more preferably 45-55%, such as around 50%;
OR
- 35 - 45% (w/w - on a dry matter basis) insect powder, preferably 40-55%, more preferably 45-55% such as around 50%; and
- 45 - 60% (w/w - on a dry matter basis) pea powder, preferably 45 - 60%, more preferably 45-55%, such as around 50%.

14. The process according to any of claims 11-13, wherein the mixture provided in step a) comprises
- 35 - 45% (w/w - on a dry matter basis) insect flour/powder, preferably buffalo worm flour/powder;
- 53 - 63% (w/w - on a dry matter basis) pea flour/powder; and
- 0.25 - 2% (w/w - on a dry matter basis) of stabilizer/emulsifier, preferably Cremodan.

15. A food ingredient or food product obtained/obtainable by a process according to any of claims 11-14.
